# EUROPEAN PATENT SPECIFICATION

(11) **EP 2 481 327 B1**
(45) Date of publication and mention of the grant of the patent: **10.07.2013**
(21) Application number: 11152909.5
(22) Date of filing: 01.02.2011
(51) Int. Cl.: A47J 19/02, A47J 43/07

(54) **Juice extractor with brake device**
Entsafter mit Bremsvorrichtung
Extracteur de jus doté d'un dispositif de frein

(43) Date of publication of application: 01.08.2012
(73) Proprietor: Wu, Pei-Hsing, Bade City, Taipei (ZW)
(72) Inventor: Wu, Pei-Hsing, Bade City, Taipei (ZW)
(74) Representative: Viering, Jentschura & Partner

(56) References cited:
- CN-Y- 200 947 796
- FR-A1- 2 587 592
- US-B1- 6 962 107

## Description

### BACKGROUND OF THE INVENTION

### 1. Field of the Invention

The present invention relates generally to a juice extractor, and in particular to a juice extractor with a brake device which allows the user to stop the operation of the juice extractor when in need.

### 2. The Prior Arts

The juice extractors in the market nowadays usually have a feed channel with a food pusher. The food pusher pushes fruits or vegetables down the feed channel and presses them against a blade disk at the bottom. Thus the fruits or vegetables are chopped and ground into juice.

A power switch controls the motor of the conventional juice extractors. In other words, when the power switch is turned on, the motor drives the blade disc to rotate continuously; whereas, when the power switch is turned off, the motor and the blade disc stops rotating. However, there is no brake device for the conventional juice extractors so that when the user needs to stop the operation of the juice extractor, there is no way but to wait until the blade disc stops by itself after the switch is turned off. This may cause dangerous results. US 6 962 107 B1 discloses a juice extractor, wherein a rotary shaft of a juicer motor is braked by engaging an arch-shaped braking piece against the peripheral sidewall of a circular block that is mounted on the rotary shaft exteriorly of the motor shell for simultaneous rotation with the rotary shaft.

### SUMMARY OF THE INVENTION

A primary objective of the present invention is to provide a juice extractor with a brake device which stops the operation of the juice extractor when needing to ensure safe operation to the users.
This objective is achieved by a juice extractor according to claim 1.

According to the present invention, a brake device for a juice extractor is provided and includes a brake disc connected to the driving shaft of the motor and a brake frame pivotably connected to the main body. An operation member is movably connected to the main body so that the user can operate the operation member to drive the brake frame to control the brake frame to apply a force to the brake disc to stop the driving shaft of the motor. Or to release the brake frame from the brake disc to allow the driving shaft to drive the blade disc to cut the food.

The juice extractor includes a main body in which a cutting device and a brake device are located. The cutting device includes a motor with a driving shaft and a blade disc is connected to the driving shaft. The brake device includes an operation member movably connected to the main body, a spring connected to the main body, a brake frame pivotably connected to the main body, and a brake disc connected to a driving shaft. The operation member has a push member which contacts the brake frame and the spring. When the operation member is moved in a first direction, the push member releases a force applied to the brake frame and the spring, so that the brake frame applies a force to the brake disc to brake the juice extractor; when the operation member is moved in a second direction opposite to the first direction, the push member applies a force to the brake frame and the spring, so that the brake frame releases a force applied to the brake disc.

The brake frame has a torsion spring which stores energy when the brake frame releases a force applied to the brake disc. When the push member releases a force applied to the brake frame, the torsion spring drives the brake frame to an original position.

Preferably, the main body has a stop flange and the operation member has a guide member. When the operation member is moved to a position in the second direction, the guide member is stopped by the stop flange so that the operation member moves to shift the push member.

Preferably, the stop flange extends from a top of the main body and the operation member is a U-shaped link. The guide member is located on two sides of the U-shaped link.

Preferably, the brake disc includes a brake surface which is in contact with the brake frame so as to reduce the noise caused by the braking action. The brake frame includes a part with high friction coefficient which is in contact with the brake surface. The part with high friction coefficient is rubber, plastic, or any suitable material.

### BRIEF DESCRIPTION OF THE DRAWINGS

The present invention will be apparent to those skilled in the art by reading the following detailed description of a preferred embodiment thereof, with reference to the attached drawings, in which:

Figure 1 is a top view of a juice extractor in accordance with the present invention;

Figure 2 is a cross sectional view taken along line II-II in Figure 1, and showing a braking device of the juice extractor of the present invention is released;

Figure 3 is a cross sectional view taken along line III-III in Figure 1, and showing the braking device of the juice extractor of the present invention is released;

Figure 4 is a cross sectional view showing a brake status of the juice extractor of the present invention; and

Figure 5 is another cross sectional view showing the brake status of the juice extractor of the present invention.

### DETAILED DESCRIPTION OF THE PREFERRED EMBODIMENT

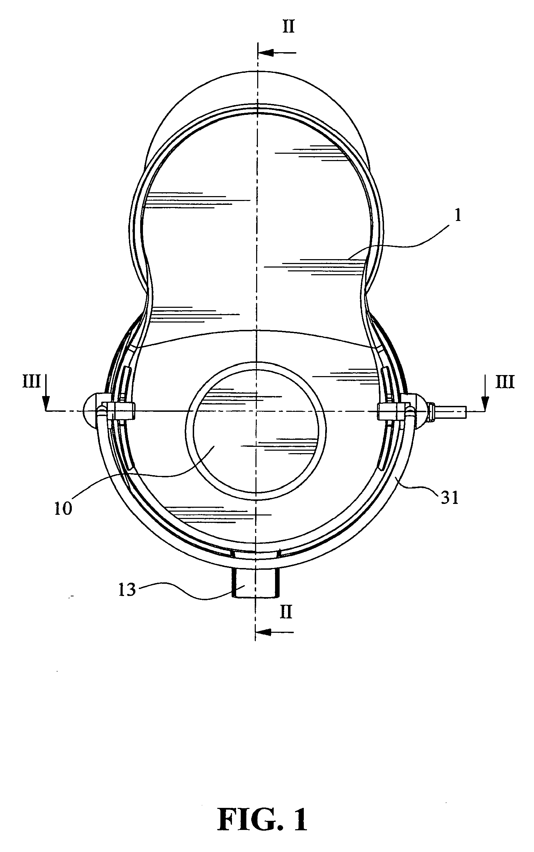

With reference to the drawings and in particular to Figures 1 to 3, a juice extractor in accordance with the present invention comprises a main body 1 in which a cutting device 2 and a brake device 3 are located. The cutting device 2 has a motor 21 with a driving shaft 211. The motor 21 are located in upright position and the driving shaft 211 extends vertically. A blade disc 22 is connected to the driving shaft 211 and located substantially horizontal. A vertical passage 10 is located in a top portion of the main body 1 and located corresponding to the blade disc 22 so that the fruits or food can be put into the passage 10 and on the blade disc 22. A pusher 11 is used to push the fruits or food in the passage 10 toward the blade disc 22 so that the fruits or food are cut by the blade disc 22 and the juice is discharged from an outlet 13.

The brake device 3 includes an operation member 31 movably connected to the main body 1, a spring 34 connected to the main body 1, a brake frame 35 pivotably connected to the main body 1, and a brake disc 37 connected to the driving shaft 211. The operation member 31 is a U-shaped link and the two push members 32 extend through a slot 14 defined through the two sides of the main body 1, so that the push members 32 are rotatable in the slot 14 and movable in the slot 14 relative to the main body 1. A guide member 33 is located on two sides of the U-shaped operation member 31 and the guide member 33 is a roller in this embodiment. The main body 1 has two stop flanges 12 extending from the top thereof and each stop flange 12 includes an inclined surface 121 on its side so that the guide member 33 moves along the inclined surface 121 and reaches the top of the stop flange 12.

The brake frame 35 is pivotably connected to the main body 1 by a pivot 351 which preferably is cooperated with a torsion spring 36 which has two ends contacting the inside of the main body 1 and the brake frame 35. The lower end of the brake frame 35 and the lower end of the spring 34 are in contact with the top of the push members 32. Preferably, the brake frame 35 includes a part 352 with high friction coefficient which is in contact with the brake surface 371. The part 352 with high friction coefficient can be rubber, plastic, compound material, or any suitable material. The brake disc 37 is fixed to the driving shaft 211 between the blade disc 22 and the motor 21. The brake disc 37 has an annular brake surface 371 which is located corresponding to the upper end of the brake frame 35.

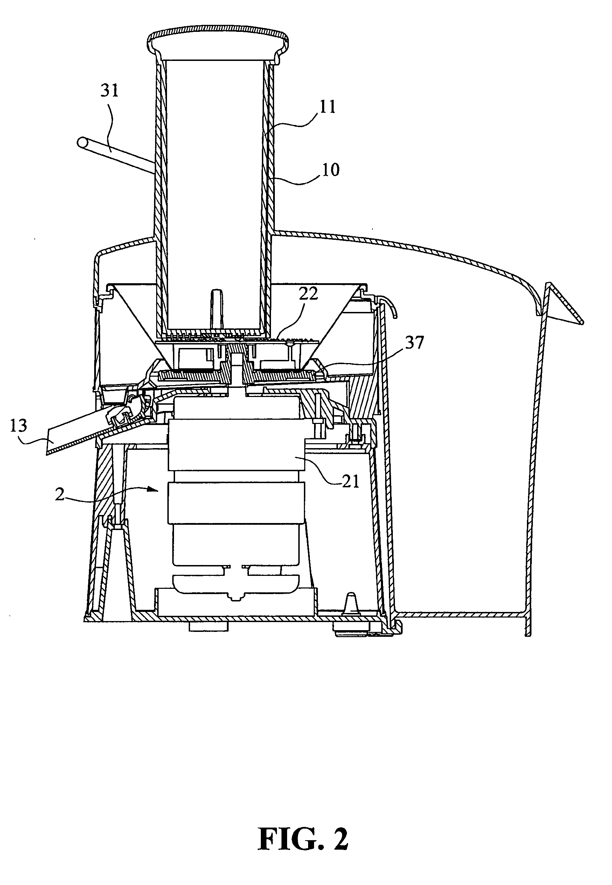

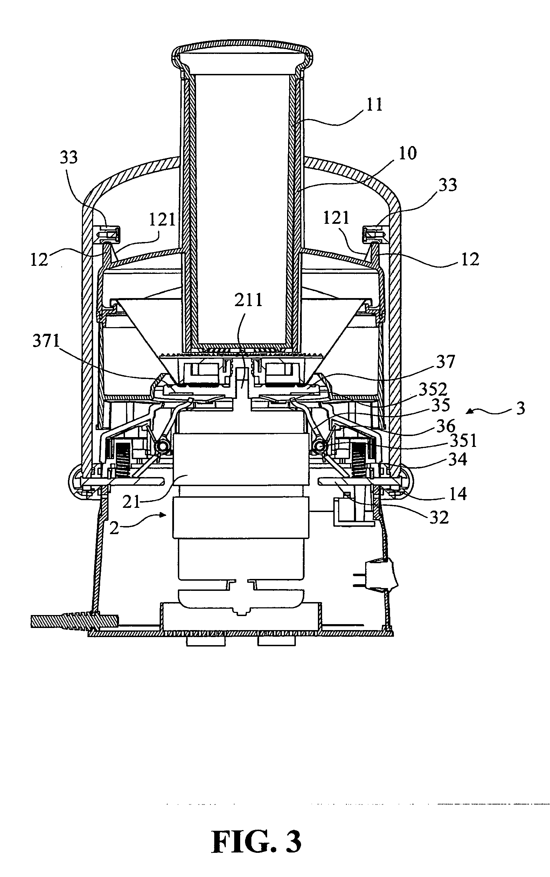

Figures 2 and 3 show that when using the juice extractor, the brake device 3 is released from the braking status so that the motor 21 is operated. The operation member 31 is rotated about the push members 32 to guide the guide member 33 along the inclined surface 121 of the stop flange 12 and reaches the top of the stop flange 12. The operation member 31 and the push members 32 are moved upward together and the push members 32 pivot the brake frame 35 to pivot about the pivot 351 to allow the part 352 with high friction coefficient to be separated from the brake surface 371, and the torsion spring 36 is deformed to store energy. The push members 32 push the spring 34 to store energy too.

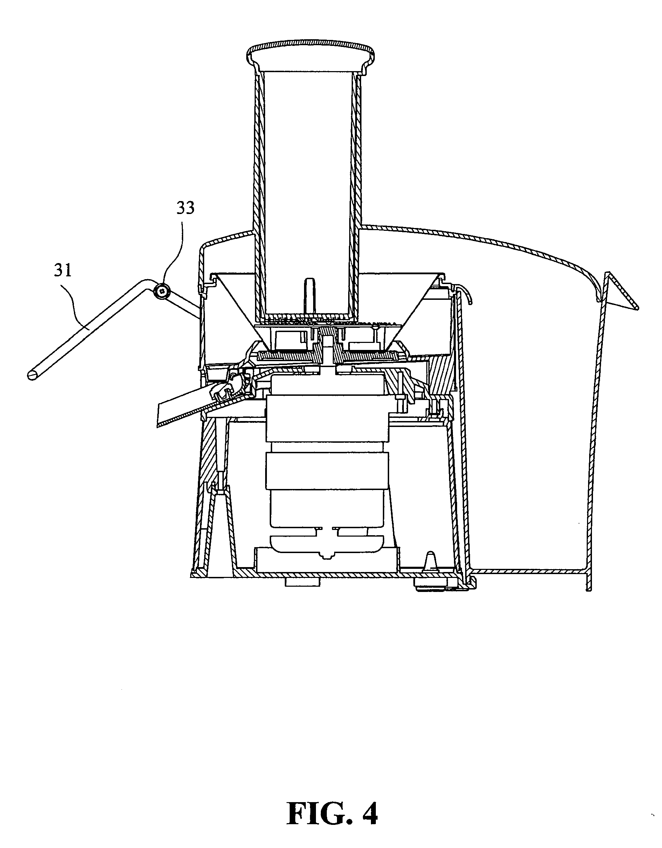

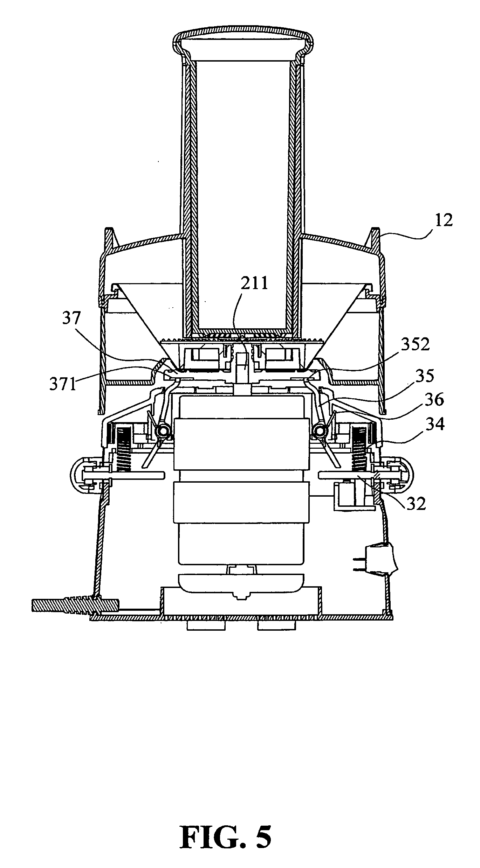

Referring to Figures 4 and 5, when the juice extractor needs to be braked in emergency situation, the operation member 31 is rotated downward about the push members 32, the guide member 33 is guided downward along the inclined surface 121. The spring 34 moves the push member 32 to move a distance in the slot 14. Because the push member 32 releases the upward force applied to the brake frame 35, the torsion spring 36 drives the brake frame 35 to rotate such that the part 352 with high friction coefficient contacts the brake surface 371 of the brake disc 37 to stop the rotation of the driving shaft 211. Therefore, the juice extractor can be stopped immediately.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A juice extractor comprising
a main body (1);
a cutting device (2) located in the main body (1); and
a brake device (3) located in the main body (1) and connected to the cutting device (2), the cutting device (2) being stopped by the brake device (3),
wherein the brake device (3) comprises an operation member (31) movably connected to the main body (1), a spring (34) connected to the main body (1), a brake frame (35) pivotably connected to the main body (1) by a pivot (351), and a brake disc (37) connected to a driving shaft (211) of a motor (21), wherein the pivot (351) cooperates with a torsion spring (36) contacting the inside of the main body (1) and the brake frame (35),
wherein the operation member (31) has a push member (32) which is in contact with the brake frame (35) and the spring (34), when the brake device (3) is released from a braking status; and wherein the push member (32) is configured to release a force applied to the brake frame (35) and the spring (34) when the operation member (31) is moved in a first direction, so that the brake frame (35) applies a force to the brake disc (37) to brake the juice extractor; and wherein the push member (32) is configured to apply a force to the brake frame (35) and the spring (34) when the operation member (31) is moved in a second direction opposite to the first direction, so that the brake frame (35) releases a force applied to the brake disc (37),
and wherein the brake frame (35) has a torsion spring (36) which is configured to store energy when the brake frame (35) applies the force to the brake disc (37), and to return the brake frame (35) to an original position when the brake frame (35) releases the force from the brake disc (37).

2. The juice extractor as claimed in claim 1, wherein the main body (1) has a stop flange (12) and the operation member (31) has a guide member (33), and wherein the guide member (31) is configured to be stopped by the stop flange (12) when the operation member (31) is moved to a position along the second direction, so that the operation member (31) moves to shift the push member (32).

3. The juice extractor as claimed in claim 1, wherein the stop flange (12) extends from a top of the main body (1) and the operation member (31) is a U-shaped link with the guide members (33) located on two sides of the U-shaped link.

4. The juice extractor as claimed in claim 1, wherein the brake disc (37) includes a brake surface (371) used to be in contact with the brake frame (35).

5. The juice extractor as claimed in claim 4, wherein the brake frame (35) includes a part (352) with high friction coefficient used to be in contact with the brake surface (371).

6. The juice extractor as claimed in claim 5, wherein the part with high friction (352) coefficient is rubber.

7. The juice extractor as claimed in claim 1, wherein the guide member (33) is a roller.

## Patentansprüche

1. Ein Entsafter, aufweisend:
einen Hauptkörper (1),
eine Schneidevorrichtung (2), die in dem Hauptkörper (1) angeordnet ist, und
eine Bremsvorrichtung (3), die in dem Hauptkörper (1) angeordnet ist und mit der Schneidevorrichtung (2) verbunden ist, wobei die Schneidevorrichtung (2) von der Bremsvorrichtung (3) angehalten wird,
wobei die Bremsvorrichtung (3) aufweist: ein Betätigungselement (31), das bewegbar mit dem Hauptkörper (1) verbunden ist, eine Feder (34), die mit dem Hauptkörper (1) verbunden ist, einen Bremsrahmen (35) der mittels eines Gelenks (351) gelenkig mit dem Hauptkörper (1) verbunden ist, und eine Bremsscheibe (37), die mit einer Antriebswelle (211) eines Motors (21) verbunden ist, wobei das Gelenk (351) mit einer Torsionsfeder (36) zusammenwirkt, die die Innenseite des Hauptkörpers (1) und den Bremsrahmen (35) kontaktiert,
wobei das Betätigungselement (31) ein Drückelement (32) aufweist, das mit dem Bremsrahmen (35) und der Feder (34) in Kontakt ist, wenn die Bremsvorrichtung (3) aus einem Bremszustand gelöst ist, und wobei das Drückelement (32) eingerichtet ist, um eine auf den Bremsrahmen (35) und die Feder (34) aufgebrachte Kraft zu lösen, wenn das Betätigungselement (31) in einer ersten Richtung bewegt wird, so dass der Bremsrahmen (35) eine Kraft auf die Bremsscheibe (37) aufbringt, um den Entsafter abzubremsen, und wobei das Drückelement (32) eingerichtet ist, um eine Kraft auf den Bremsrahmen (35) und die Feder (34) aufzubringen, wenn das Betätigungselement (31) in einer zweiten Richtung entgegengesetzt zu der ersten Richtung bewegt wird, so dass der Bremsrahmen (35) eine auf die Bremsscheibe (37) aufgebrachte Kraft löst,
und wobei der Bremsrahmen (35) eine Torsionsfeder (36) aufweist, die eingerichtet ist, um Energie zu speichern, wenn der Bremsrahmen (35) die Kraft auf die Bremsscheibe (37) aufbringt, und den Bremsrahmen (35) in eine ursprüngliche Position zurückzubringen, wenn der Bremsrahmen (35) die Kraft von der Bremsscheibe (37) löst.

2. Der Entsafter gemäß Anspruch 1, wobei der Hauptkörper (1) einen Halteflansch (12) aufweist und das Betätigungselement (31) ein Führungselement (33) aufweist, und wobei das Führungselement (31) eingerichtet ist, um von dem Halteflansch (12) angehalten zu werden, wenn das Betätigungselement (31) in eine Position entlang der zweiten Richtung bewegt wird, so dass das Betätigungselement (31) sich bewegt, um das Drückelement (32) zu verlagern.

3. Der Entsafter gemäß Anspruch 1, wobei sich der Halteflansch (12) von einer Oberseite des Hauptkörpers (1) aus erstreckt und das Betätigungselement (31) eine U-förmige Verbindung mit den Führungselementen (33) ist, die an zwei Seiten der U-förmigen Verbindung positioniert sind.

4. Der Entsafter gemäß Anspruch 1, wobei die Bremsscheibe (37) eine Bremsfläche (371) aufweist, die verwendet wird, um mit dem Bremsrahmen (35) in Kontakt zu sein.

5. Der Entsafter gemäß Anspruch 4, wobei der Bremsrahmen (35) einen Abschnitt (352) mit einem hohen Reibungskoeffizienten aufweist, der verwendet wird, um mit der Bremsfläche (371) in Kontakt zu sein.

6. Der Entsafter gemäß Anspruch 5, wobei der Abschnitt mit dem hohen Reibungskoeffizienten (352) Gummi ist.

7. Der Entsafter gemäß Anspruch 1, wobei das Führungselement (33) eine Rolle ist.

## Revendications

1. Extracteur de jus comprenant :
un corps principal (1) ;
un dispositif de coupe (2) situé dans le corps principal (1) ; et
un dispositif de frein (3) situé dans le corps principal (1) et raccordé au dispositif de coupe (2), le dispositif de coupe (2) étant arrêté par le dispositif de frein (3),
dans lequel le dispositif de frein (3) comprend un élément de commande (31) raccordé de manière mobile au corps principal (1), un ressort (34) raccordé au corps principal (1), un cadre de frein (35) raccordé de manière pivotante au corps principal (1) par un pivot (351), et
un disque de frein (37) raccordé à un arbre d'entraînement (211) d'un moteur (21),
dans lequel le pivot (351) coopère avec un ressort de torsion (36) qui met en contact l'intérieur du corps principal (1) et le cadre de frein (35),
dans lequel l'élément de commande (31) a un élément de poussée (32) qui est en contact avec le cadre de frein (35) et le ressort (34), lorsque le dispositif de frein (3) est libéré d'un état de freinage ; et dans lequel l'élément de poussée (32) est configuré pour libérer une force appliquée sur le cadre de frein (35) et le ressort (34) lorsque l'élément de commande (31) est déplacé dans une première direction, de sorte que le cadre de frein (35) applique une force sur le disque de frein (37) pour freiner l'extracteur de jus ; et dans lequel l'élément de poussée (32) est configuré pour appliquer une force sur le cadre de frein (35) et le ressort (34) lorsque l'élément de commande (31) est déplacé dans une seconde direction opposée à la première direction, de sorte que le cadre de frein (35) libère une force appliquée sur le disque de frein (37),
et dans lequel le cadre de frein (35) a un ressort de torsion (36) qui est configuré pour stocker de l'énergie lorsque le cadre de frein (35) applique la force sur le disque de frein (37), et pour ramener le cadre de frein (35) dans une position d'origine lorsque le cadre de frein (35) libère la force du disque de frein (37).

2. Extracteur de jus selon la revendication 1, dans lequel le corps principal (1) a une bride de butée (12) et l'élément de commande (31) a un élément de guidage (33), et dans lequel l'élément de guidage (31) est configuré pour être arrêté par la bride de butée (12) lorsque l'élément de commande (31) est déplacé dans une position le long de la seconde direction, de sorte que l'élément de commande (31) se déplace pour décaler l'élément de poussée (32).

3. Extracteur de jus selon la revendication 1, dans lequel la bride de butée (12) s'étend à partir d'une partie supérieure du corps principal (1) et l'élément de commande (31) est une liaison en forme de U avec les éléments de guidage (33) situés des deux côtés de la liaison en forme de U.

4. Extracteur de jus selon la revendication 1, dans lequel le disque de frein (37) comprend une surface de frein (371) utilisée pour être en contact avec le cadre de frein (35).

5. Extracteur de jus selon la revendication 4, dans lequel le cadre de frein (35) comprend une partie (352) avec un coefficient de friction élevé, utilisée pour être en contact avec la surface de frein (371).

6. Extracteur de jus selon la revendication 5, dans lequel la partie avec le coefficient de friction élevé (352) est du caoutchouc.

7. Extracteur de jus selon la revendication 1, dans lequel l'élément de guidage (33) est un rouleau.
